# EUROPEAN PATENT SPECIFICATION

(11) **EP 3 644 581 B1**
(45) Date of publication and mention of the grant of the patent: **27.01.2021**
(21) Application number: 18209052.2
(22) Date of filing: 29.11.2018
(51) Int. Cl.: H04L 29/08

(54) **EDGE-CLOUD COLLABORATION SYSTEM FOR ANALYZING INTERNET OF THINGS DATA AND OPERATING METHOD THEREOF**
EDGE-CLOUD-KOLLABORATIONSSYSTEM ZUR ANALYSE VON INTERNET-DER-DINGE-DATEN UND BETRIEBSVERFAHREN DAFÜR
SYSTÈME DE COLLABORATION DE NUAGE EN PÉRIPHÉRIE PERMETTANT D'ANALYSER DES DONNÉES DE L'INTERNET DES OBJETS ET SON PROCÉDÉ DE FONCTIONNEMENT

(30) Priority: 24.10.2018 KR 20180127607
(43) Date of publication of application: 29.04.2020
(73) Proprietor: Korea Electronics Technology Institute, Bundang-gu, Seongnam-si Gyeonggi-do 13509 (KR)
(72) Inventor: MOON, Jae Won, Seoul (KR); KUM, Seung Woo, Gyeonggi-do (KR); KIM, Young Kee, Incheon (KR); CHO, Sang Yeon, Seoul (KR)
(74) Representative: Isarpatent

(56) References cited:
- TW-B- I 637 280
- US-A1- 2017 351 241
- US-A1- 2018 285 767

## Description

### TECHNICAL FIELD

The present invention relates to edge computing technology.

### BACKGROUND

Recently, with the distribution of various Internet of Things (IoT) devices and the advance of cloud computing technology, a cloud service where a cloud device analyzes IoT data (or IoT sensor data) of an IoT device is being widely used.

In terms of real-time processing, a cloud device-based IoT service has inefficiency in that an IoT device transmits all IoT data to a cloud device and the cloud device processes all of the transmitted IoT data. This is because the cloud device is located at a distance physically far away from the IoT device, and due to this, a delay time occurs. Also, since the IoT device should provide personal data of a user to the cloud device, invasion of privacy may occur.

In order to solve such a problem, edge computing technology where a local device instead of the cloud device analyzes data is being used. The edge computing technology denotes a concept where edge devices distributedly disposed between the cloud device and the IoT device perform all or some of data analysis operations performed by the cloud device.

As described above, the edge devices may overcome a problem where real-time processing is difficult and privacy is invaded by the cloud device, but since the edge devices are lower in processing performance than the cloud device, the edge devices have a limitation in analyzing data.

From US 2017/0351241 A1 predictive and prescriptive analytics for assistance under variable operations are known, in particular for industrial systems, commercial systems and consumer systems, wherein a simulation engine operated on a development computer may generate and simulate analytical results based on an analytical operating system platform model provided by a local deployment manager.

Furthermore, an implementation of a fog computing terminal in communication with an loT device to receive sensor data and a cloud server is known from US 2018/0337820 A1, wherein a single general model may be generated based on third-party data or on all data received by the cloud server from the fog computing terminal.

### SUMMARY

Accordingly, the present invention provides an edge-cloud collaboration system for analyzing IoT data and an operating method thereof, which analyze IoT data in real time.

In one general aspect, an operating method of an edge-cloud collaboration system, which analyzes Internet of Things (IoT) data and includes a cloud device providing a cloud service, a user IoT device installed in a user space, and an edge device disposed between the cloud device and the user IoT device, includes: transmitting, by the cloud device, a data prediction model, optimized for the edge device among a plurality of data prediction models predicting variations of pieces of published IoT data, to the edge device; generating, by the edge device, prediction information obtained by predicting a variation of user IoT data collected from the user IoT device by using the optimized data prediction model and transmitting the prediction information to the user IoT device; and controlling, by the user IoT device, an indoor environment of the user space by using the prediction information.

In another general aspect, an edge-cloud collaboration system for analyzing Internet of Things (IoT) data to predict a variation of user IoT data measured by a user IoT device provided in a user space includes: a cloud device configured to generate a plurality of data prediction models for predicting an indoor environment change of each of a plurality of external spaces having indoor environments differing from an indoor environment of the user space, based on pieces of published IoT data distributed by a plurality of IoT devices respectively provided in the plurality of external spaces and select a data prediction model, optimized for predicting an indoor environment change of the user space, from among the plurality of data prediction models by using sample data of the user IoT data; and an edge device configured to extract the sample data from the user IoT data collected from the user IoT device, transmit the sample data to the cloud device, receive the selected optimized data prediction model from the cloud device, predict a variation of the user IoT data by using the optimized data prediction model, and predict the indoor environment change of the user space, based on a prediction result obtained by predicting the variation of the user IoT data.

In another general aspect, an edge-cloud collaboration system for analyzing Internet of Things (IoT) data to predict a variation of user IoT data measured by a user IoT device provided in a user space includes: a cloud device configured to generate a plurality of data prediction models for predicting an indoor environment change of each of a plurality of external spaces having indoor environments differing from an indoor environment of the user space, based on pieces of published IoT data distributed by a plurality of IoT devices respectively provided in the plurality of external spaces and generate pieces of sample data generated by decreasing dimensions of the pieces of published IoT data; and an edge device configured to receive the pieces of sample data from the cloud device, select a data prediction model, optimized for predicting an indoor environment change of the user space, from among the plurality of data prediction models by using sample data having a highest correlation with the user IoT data collected from the user IoT device among the pieces of sample data, transmit a request message requesting the selected optimized data prediction model to the cloud device, receive the optimized data prediction model from the cloud device receiving the request message, predict the variation of the user IoT data by using the received optimized data prediction model, and predict the indoor environment change of the user space, based on a prediction result obtained by predicting the variation of the user IoT data.

Other features and aspects will be apparent from the following detailed description, the drawings, and the claims.

### BRIEF DESCRIPTION OF THE DRAWINGS

FIG. 1 is a diagram illustrating a structure of an IoT network to which an operating system for performing edge computing-based IoT data analysis is applied, according to an embodiment of the present invention.
FIG. 2 is a diagram illustrating an operating system for performing edge computing-based IoT data analysis is applied, according to an embodiment of the present invention.
FIG. 3 is a block diagram illustrating internal elements of a cloud device according to an embodiment of the present invention.
FIG. 4 is a block diagram illustrating internal elements of an edge device according to an embodiment of the present invention.
FIG. 5 is a block diagram illustrating internal elements of a user IoT device according to an embodiment of the present invention.
FIG. 6 is a block diagram illustrating internal elements of an edge device according to another embodiment of the present invention.
FIG. 7 is a flowchart illustrating an operating method of an edge-cloud collaboration system for analyzing IoT data, according to an embodiment of the present invention.
FIG. 8 is a detailed flowchart of step S710 illustrated in FIG. 7.
FIG. 9 is a detailed flowchart of step S720 illustrated in FIG. 7.
FIG. 10 is another detailed flowchart of step S710 illustrated in FIG. 7.
FIG. 11 is another detailed flowchart of step S720 illustrated in FIG. 7.

### DETAILED DESCRIPTION OF EMBODIMENTS

In the specification, it will be understood that, although the terms first, second, etc. used herein may qualify various elements according to various embodiments, these elements should not be limited by these terms. For example, the terms do not limit the order and/or importance of corresponding elements. These terms are only used to distinguish one element from another. For example, a first user equipment and a second user equipment are user equipment and denote different user equipment. For example, a first element may be referred to as a second element without departing from the scope of the present invention, and similarly, the second element may also be referred to as the first element.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

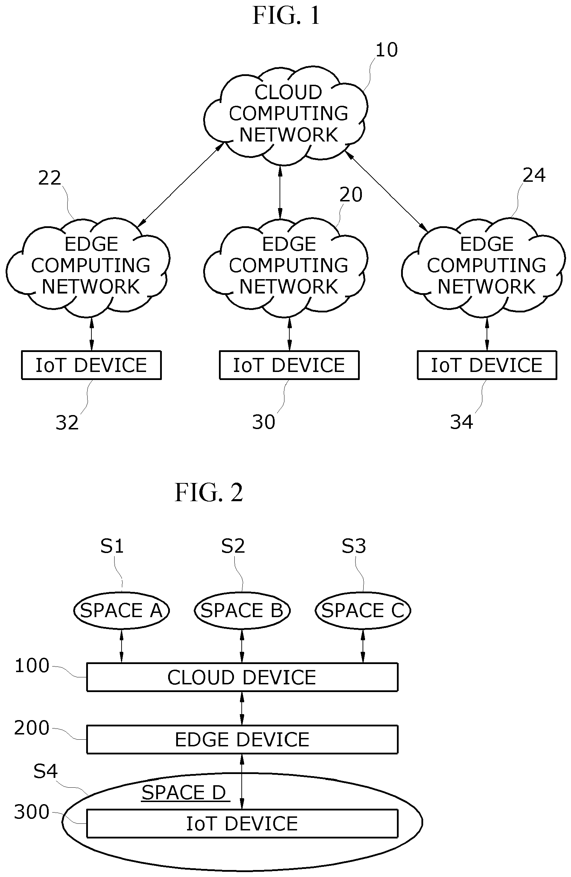

FIG. 1 is a diagram illustrating a structure of an IoT network to which an operating system for performing edge computing-based IoT data analysis is applied, according to an embodiment of the present invention.

Referring to FIG. 1, the IoT network according to an embodiment of the present invention may include a cloud computing network 10 and a plurality of edge computing networks 21 to 23.

The cloud computing system 10 may be an upper network with respect to the plurality of edge computing networks 21 to 23 and may be connected to the plurality of edge computing networks 21 to 23 so as to enable communication.

A plurality of edge computing networks 20, 22, and 24 may each be a lower network with respect to the cloud computing network 10 and may be distributed and disposed between the cloud computing network 10 and a plurality of IoT devices 30, 32, and 34. Each of the edge computing networks may be connected to an IoT device corresponding to the cloud computing network 10 so as to enable communication.

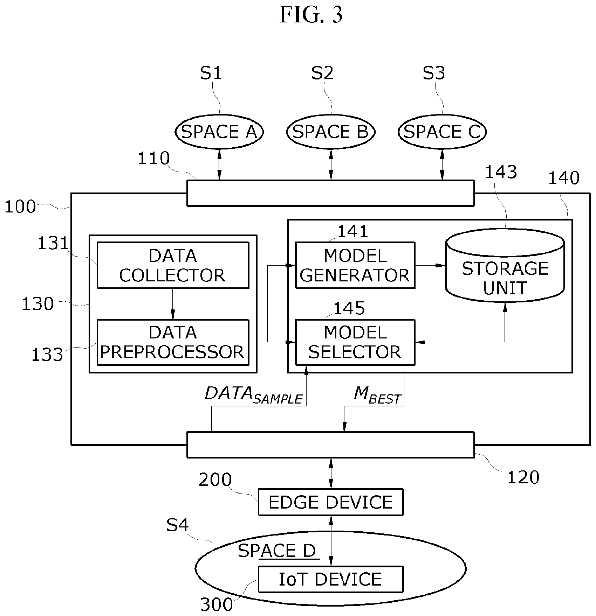

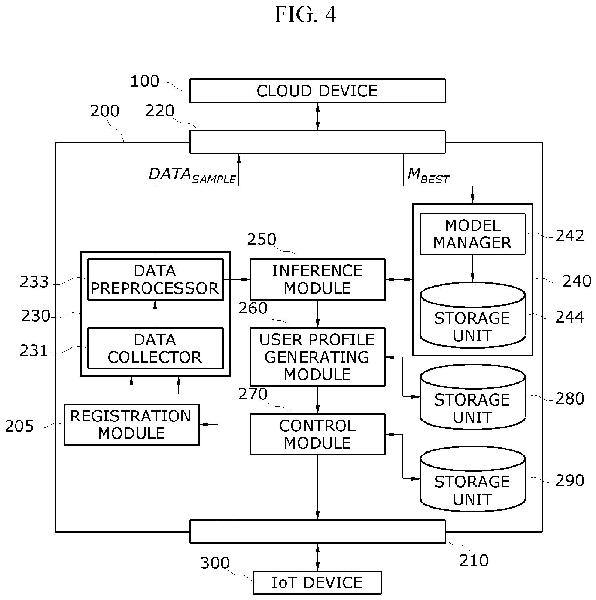

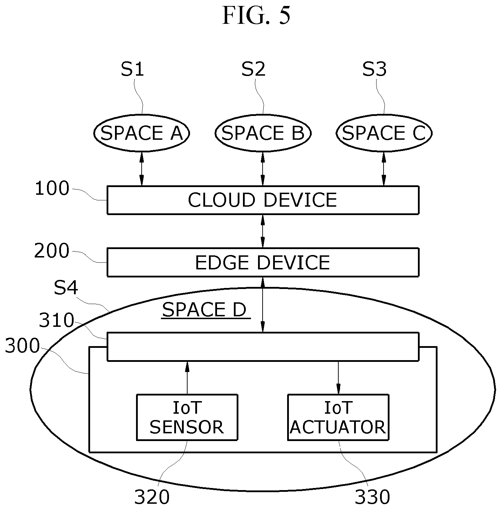

FIG. 2 is a diagram illustrating an edge-cloud collaboration system for analyzing IoT data according to an embodiment of the present invention. FIG. 3 is a block diagram illustrating internal elements of a cloud device illustrated in FIG. 2. FIG. 4 is a block diagram illustrating internal elements of an edge device illustrated in FIG. 2. FIG. 5 is a block diagram illustrating internal elements of a user IoT device illustrated in FIG. 2.

Referring to FIG. 2, the edge-cloud collaboration system for analyzing IoT data according to an embodiment of the present invention may include a cloud device 100, an edge device 200, and an IoT device 300.

In an embodiment of the present invention, the edge-cloud collaboration system may be defined as a system including an IoT device 300, but depending on the case, may be defined as a system including no IoT device 300. That is, an edge-cloud collaboration system according to another embodiment of the present invention may be defined as a system including only a cloud device 100 and an edge device 200.

The cloud device 100 may be provided in the cloud computing network 10 illustrated in FIG. 1 and may be connected to IoT devices (not shown) respectively provided in a space A (S1), a space B (S2), and a space C (S3). The cloud device 100 may collect and analyze published pieces of IoT data transmitted from the IoT devices respectively provided in the space A (S1), the space B (S2), and the space C (S3) to generate (build) a plurality of candidate machine learning models (or candidate data prediction models) for predicting an indoor environment change of a space D (S4). The cloud device 100 may select a machine learning model (an optimized data prediction model), optimized for an inference operation of the edge device 200 for predicting the indoor environment change of the space D (S4), from among the generated plurality of candidate machine learning models in response to a request of the edge device 200 and may transmit the selected machine learning model to the edge device 200.

The edge device 200 may be provided in each of the edge computing networks 20, 22, and 24 illustrated in FIG. 1. Therefore, the edge device 200 may be provided between the cloud device 100 and the IoT device 300. The edge device 200 may be connected to the cloud device 100 and the IoT device 300. The edge device 200 may predict a variation of IoT data (an environmental factor of the space D) collected from the IoT device 300 by using an optimal machine learning model transmitted from the cloud device 100 and may transmit a result of the prediction to the IoT device 300.

The IoT device 300 may be connected to the edge device 200. The IoT device 300 may perform an operation of improving an indoor environment of the space D or warning against the badness of the indoor environment of the space D, based on the prediction result transmitted from the edge device 200. Hereinafter, the IoT device 300 provided in the space D may be referred to as a user IoT device, a personal IoT device, a user device, or a user terminal, for differentiating from the IoT devices respectively provided in the space A (S1), the space B (S2), and the space C (S3).

### Cloud device 100

The cloud device 100, as illustrated in FIG. 3, may include a plurality of cloud communication modules 110 and 120, a cloud data management module 130, and a cloud model management module 140.

The cloud communication modules 110 and 120 may include a first cloud communication module 110 and a second cloud communication module 120. The first cloud communication module 110 may establish a communication connection between IoT sensors respectively disposed in the different spaces S1 to S3 and the cloud device 100. The second cloud communication module 120 may establish a communication connection between the cloud device 100 and the edge device 200. The communication connections may include a connection based on wired communication and a connection based on wireless communication. The wired communication may include, for example, at least one of universal serial bus (USB), high definition multimedia interface (HDMI), recommended standard232 (RS-232), and plain old telephone service (POTS). The wired communication may include, for example, at least one of long-term evolution (LTE), LTE Advance (LTE-A), code division multiple access (CDMA), wideband CDMA (WCDMA), universal mobile telecommunications system (UMTS), wireless broadband (WiBro), and global system for mobile communications (GSM). Also, the wired communication may include, for example, short-distance communication. The short-distance communication may include, for example, wireless fidelity (WiFi), Bluetooth, near field communication (NFC), magnetic stripe transmission (MST), and global navigation satellite system (GNSS). The first cloud communication module 110 and the second cloud communication module 120 may be included in one cloud communication module.

The cloud data management module 130 may collect pieces of data of the spaces A to C and may preprocess collected pieces of IoT data to generate data available by the cloud model management module 140. To this end, the cloud data management module 130 may include a data collector 131 and a data preprocessor 132.

The data collector 131 may collect, through the first cloud communication module 110, pieces of IoT data from the IoT sensors (not shown) respectively disposed in the different spaces S1 to S3. The pieces of IoT data may be pieces of data, which are allowed to be externally published by users residing in spaces, or pieces of published data distributed for research by science institution or public institution. The pieces of IoT data may each be, for example, time-series indoor or outdoor environmental data. The indoor or outdoor environmental data may be referred to as an indoor or outdoor environmental factor. The indoor or outdoor environmental data may be data which is high in dependency on time and spaces, and for example, may include a noise index measured by a noise sensor, a CO₂ concentration index measured by a CO₂ sensor, a temperature index measured by a temperature sensor, a humidity index measured by a humidity sensor, and a particulate matter (PM) index (for example, PM2.5, PM10, or the like) measured by a PM measurement sensor.

The data preprocessor 133 may preprocess the collected pieces of IoT data, for generating a machine learning model (a data prediction model for predicting a future indoor environment) differentiated by units of attributes (for example, a space attribute, a time attribute, and a data attribute) by the cloud model management module 140.

In an embodiment, a preprocessing operation performed by the data preprocessor 133 may be an operation of splitting the collected pieces of IoT data by units of attributes (for example, a space attribute, a time attribute, and a data attribute) to generate a plurality of data sets.

A space attribute-based splitting operation may be, for example, an operation of generating a data set including pieces of IoT data collected from the space A (S1), a data set including pieces of IoT data collected from the space B (S2), and a data set including pieces of IoT data collected from the space C (S3).

The time attribute-based splitting operation may be an operation of splitting the collected pieces of IoT data by units of times to generate a plurality of data sets.

The data attribute-based splitting operation may be an operation of splitting the collected pieces of IoT data by units of data kinds or formats to generate a plurality of data sets. The plurality of data sets may include, for example, a data set including a plurality of noise indexes, a data set including a plurality of CO₂ concentration indexes, a data set including a plurality of temperature indexes, a data set including a plurality of humidity indexes, and a data set including a plurality of PM indexes.

The data sets generated by units of attributes may have a hierarchical relationship. For example, a data set generated based on the space attribute may be configured as an upper data set, a data set generated based on the data attribute may be configured as a lower data set, and a data set generated based on the time attribute may be configured as a medium data set.

In another embodiment, a preprocessing operation performed by the data preprocessor 133 may be an operation of decreasing a data dimension of each of the collected pieces of IoT data. The operation of decreasing the data dimension may be an operation of selecting pieces of IoT sensor data, collected for a certain time, from among the collected pieces of IoT data to generate sample data including the selected pieces of IoT sensor data. Also, the operation of decreasing the data dimension may be an operation of labeling the collected pieces of IoT data into representative data. The representative data may be, for example, an intermediate value or an average value of pieces of IoT data collected by units of certain periods.

The cloud model management module 140 may generate a plurality of candidate machine learning models for predicting a future indoor environment on the basis of pieces of IoT data collected and preprocessed by the cloud data management module 130, select a machine learning model (a data prediction model for predicting a future indoor environment), which is the most suitable for pieces of user IoT data (pieces of local data or pieces of personal data) collected by the edge device 200, from among the generated plurality of candidate machine learning models, and provide the selected machine learning model to the edge device 200. To this end, the cloud model management module 140 may include a model generator 141, a storage unit 143, and a model selector 145.

The model generator 141 may learn pieces of IoT data split by units of attributes (for example, a space attribute, a time attribute, and a data attribute) to generate a plurality of candidate machine learning models (candidate data prediction models) for predicting an indoor environment. That is, the generated plurality of candidate machine learning models may be built to predict individual data corresponding to each of the attributes.

Pieces of indoor or outdoor environmental data may depend on spaces, time, and season, and thus, pieces of IoT data representing indoor and outdoor environmental attributes may be pieces of data which are very high in dependency on spaces and time. A machine learning model (a data prediction model) which has learned pieces of IoT data by units of attributes may be built for ensuring the prediction performance, corresponding to an indoor environment, of the edge device 200.

A method of generating the machine learning model (the data prediction model) for predicting an indoor environment may use deep learning technology such as a long short-term memory (LSTM) model for predicting future data by using data corresponding to a certain past time.

The storage unit 143 may store the plurality of candidate machine learning models (the candidate data prediction models) generated by the model generator 141.

The model selector 145 may select an optimal machine learning model (an optimal data prediction model), which is the most suitable for predicting (inferring) an environment of the space D (S4) by using the edge device 200, from among the plurality of candidate machine learning models stored in the storage unit 143 and may transmit the selected optimal machine learning model to the edge device 200 through the second cloud communication model 120.

In order to select the optimal machine learning model, the model selector 145 may use limited information transmitted from the edge device 200. The limited information may be sample data DATAₛₐₘₚₗₑ generated by decreasing user IoT data collected by the edge device 200. The sample data may be defined as, for example, pieces of user IoT data collected from a certain past time period from among all pieces of user IoT data collected by the IoT device 300 provided in the space D (S4).

The model selector 145 may select a candidate machine learning model (a candidate data prediction model) or a candidate machine learning model group (a candidate data prediction model group), which has each learned by using pieces of IoT data having a highest correlation with the sample data, as an optimal machine learning model M_{bset} from among the plurality of candidate machine learning models stored in the storage unit 143.

The correlation may be used as the term which denotes strength representing any statistical relationship or any statistical association between two or more pieces of data (or two or more variables). Here, the strength may denote a correlation coefficient. Correlation analysis may be used for calculating the correlation coefficient and may include simple correlation analysis and multi correlation analysis. The simple correlation analysis may be an operation of calculating a correlation coefficient between two pieces of data (or two variables), and the multi correlation analysis may be an operation of calculating a correlation coefficient between three or more pieces of data (or three or more variables). The correlation analysis may use, for example, a Pearson correlation coefficient calculating method, a Spearman correlation coefficient calculating method, a Cronbach's alpha coefficient reliability calculating method, or regression analysis.

In this manner, the model selector 145 may select the optimal machine learning model M_{best} (an optimal data prediction model) by using the limited information (the sample data) provided from the edge device 200 and may provide the selected optimal machine learning model M_{best} to the edge device 200.

As a dimension of data transmitted or received to or from the cloud device 100 increases, the edge device 200 may depend on a network status. This may denote that, when the network status is unstable, it is difficult to provide a data analysis service in real time.

Moreover, in the edge device 200 which is lower in processing performance than the cloud device 100, the number of tasks capable of being processed may be limited, and the cloud device 100 may provide the edge device 200 with all candidate machine learning models M_{best} (data prediction models). Therefore, the cloud device 100 may exchange minimal information with the edge device 200.

On the other hand, the edge device 200 may transmit only user IoT data DATAₛₐₘₚₗₑ collected for a certain time from among all pieces of user IoT data instead of transmitting all pieces of user IoT data to the model selector 145 of the cloud device 100, and the cloud device 100 may transmit an optimal machine learning model selected based on the sample data DATAₛₐₘₚₗₑ instead of transmitting all candidate machine learning models (data prediction models) to the edge device 200.

Moreover, the edge device 200 may provide minimal information DATAₛₐₘₚₗₑ to the cloud device 100, thereby preventing invasion of privacy.

### Edge device 200

The edge device 200 may predict a variation of user IoT data collected from the space D (S4) by using the optimal machine learning model M_{bset} or the optimal machine learning model group (the data prediction model group) provided from the cloud device 100 and may provide a user IoT device with control information for changing an environment of the space D (S4) or notifying waring associated with the environment of the space D (S4), based on a result of the prediction.

To this end, as illustrated in FIG. 4, the edge device 200 may include a plurality of edge communication modules 210 and 220, an edge data management module 230, an edge model management module 240, an inference module 250, a user profile generating module 260, a control module 270, and a plurality of storage units 280 and 290.

The plurality of edge communication modules 210 and 220 may include a first edge communication module 210 and a second edge communication module 220. The first edge communication module 210 may establish a communication connection between the edge device 200 and the IoT device 300. The second edge communication module 220 may establish a communication connection between the edge device 200 and the cloud device 100. The communication connection may include a connection based on wired communication and a connection based on wireless communication. The wired communication and the wireless communication are the same as described above.

The edge data management module 230 may collect pieces of time-series user IoT data provided from the IoT device 300 and may preprocess the collected pieces of time-series user IoT data. To this end, the edge data management module 230 may include a data collector 231 and a data preprocessor 233.

The data collector 231 may collect pieces of user IoT data provided from the IoT device 300 through the first edge communication module 210. The user IoT data may be indoor or outdoor environmental data of the space D (S4). The user IoT data may be referred to as personal data or user data.

The data preprocessor 233 may preprocess the pieces of user IoT data to generate data capable of being processed by the inference module 250. A preprocessing operation of the data preprocessor 233 may be similar to a preprocessing operation of the data preprocessor 133 included in the cloud device 100 illustrated in FIG. 3. That is, the preprocessing operation of the data preprocessor 233 may be an operation of splitting the collected pieces of user IoT data by units of attributes (for example, a space attribute, a time attribute, and a data attribute) to generate a plurality of data sets. An operation of decreasing a data dimension may be, for example, an operation of selecting pieces of IoT data, collected for a certain time, from among the collected pieces of IoT data to generate sample data including the selected pieces of IoT data. Also, the operation of decreasing the data dimension may be an operation of labeling the collected pieces of IoT data into representative data. The representative data may be, for example, an intermediate value or an average value of pieces of IoT data collected by units of certain periods.

In this manner, the edge device 200 may provide the cloud device 100 with limited information such as the sample data. In this case, as the amount of sample data DATAₛₐₘₚₗₑ transmitted from the edge device 200 to the cloud device 100 increases, a possibility that the cloud device 100 selects an optimal machine learning model M_{best} may increase, and moreover, a possibility that the privacy of a user is invaded may increase. This may denote that the amount of sample data DATAₛₐₘₚₗₑ transmitted from the edge device 200 to the cloud device 100 has a tradeoff relationship with a probability that the cloud device 100 selects the optimal machine learning model M_{best}.

The amount of sample data DATAₛₐₘₚₗₑ transmitted to the cloud device 100 may be appropriately set based on the tradeoff relationship. An operation of setting the amount of sample data may be performed by the data preprocessor 233. The amount of sample data may be set based on a hardware performance specification of the edge device 200 and the number of IoT sensors 320 included in the IoT device 300. The number of IoT sensors 320 may be inversely proportional to the amount of sample data. That is, as the number of IoT sensors 320 increases, the amount of sample data may decrease, and as the number of IoT sensors 320 decreases, the amount of sample data may increase.

When the IoT device 300 includes a sufficient number of IoT sensors, the edge device 200 may collect pieces of user IoT data by units of various attributes from the sufficient IoT sensors. Therefore, even when the amount of sample data of user IoT data based on each attribute decreases, a machine learning model having excellent prediction performance may be obtained based on the sample data.

Information about the number of IoT sensors 320 may be obtained from a registration module 205. The registration module 205 may be a module for performing an operation of registering the IoT device 300 and may receive and store device information about the IoT device 300 to register the IoT device 300. The device information about the IoT device 300 may include, for example, identification information about a user possessing the IoT device 300, identification information about the IoT device 300, and information about the number of IoT sensors 320 included in the IoT device 300.

The data preprocessor 233 may set the amount of sample data corresponding to pieces of user IoT data, based on the information about the number of IoT sensors 320 transferred from the registration module 205.

The edge model management module 240 may receive an optimal machine learning model M_{bset} or an optimal machine learning model group (an optimal data prediction model group) from the cloud device 100. To this end, the edge model management module 240 may include a model manager 242 and a storage unit 244.

The model manager 242 may transmit, through the second edge communication module 220, a model request message which requests the optimal machine learning model M_{bset} from the model selector 145 of the cloud device 100, and the model selector 145 may transmit the optimal machine learning model M_{bset} to the model manager 242 in response to the model request message.

The model manager 242 may store the optimal machine learning model M_{bset}, transmitted from the model selector 145 of the cloud device 100 through the second edge communication module 220, in the storage unit 244. Since the optimal machine learning model M_{bset} is stored in the storage unit 244, an operation of preparing for inference of user IoT data may be completed. Subsequently, based on a request of the inference module 250, the model manager 242 may output the optimal machine learning model M_{bset}, stored in the storage unit 244, to the inference module 250.

The inference module 250 may predict a variation of preprocessed user IoT data (an indoor or outdoor environment change of the space D) input from the data preprocessor 233 by using the optimal machine learning model transmitted from the edge model management module 240 and may transmit a result of the prediction to the user profile generating module 260.

The user profile generating module 260 may profile the prediction result from the inference module 250 to generate a user profile and may output the generated user profile to the control module 260.

The prediction result may be an absolute numerical value such as an integer or a real number, and thus, may be converted into a user profile through a profiling operation so as to be construed by the control module 260.

A profile table stored in the storage unit 280 may be used for profiling the prediction result. The profile table may define a conversion rule which converts the prediction result, consisting of an absolute value, into the user profile.

The following Table 1 may be an example of the profile table stored in the storage unit 280.

**[Table 1]**

| | | |
|---|---|---|
| Prediction result (after N minutes) | User profile | |
| | Profile name | Profile value |
| Indoor PM25 | PM25_future_Level | Good or Bad |
| CO₂ value (integer or real number) | CO₂_future_Level | Good or Bad |
| Humidity value (integer or real number) | Humidity_Level_Future | High or Low |
| Noise value (integer or real number) | Noise_Level_Future | High or Low |

As in Table 1, the user profile may be defined as a concept that includes a profile name and a profile value capable of being assigned to each profile name.

The control module 270 may output control information which controls an operation of an actuator included in the IoT device 300 so as to improve the environment of the space D or to notify warning associated with the environment of the space D, based on the user profile input from the inference module 250. The output control information may be transmitted to the IoT device 300 through the first edge communication module 210.

The control module 270 may use an actuator table stored in the storage unit 290, for generating the control information. The actuator table may define a conversion rule which converts the user profile into control information for controlling an operation of the actuator.

The following Table 2 may be an example of the actuator table stored in the storage unit 290.

**[Table 2]**

| User profile | | |
|---|---|---|
| Profile name | Profile value | Operation of actuator |
| PM25_future_Leve 1 | Good or Bad | Air-Warning (ON or OFF) |
| | | Air-Notifier (Red or Blue) |
| | | Door-Warning (Indoor door open or close) |
| CO₂_future_Level | Good or Bad | Air-Warning (ON or OFF) |
| | | Air-Notifier (Red or Blue) |
| | | Door-Warning (Indoor door open or close) |
| Humidity_Level_F uture | High or Low | Air-Warning(ON or OFF) |
| | | Air-Notifier (Red or Blue) |
| | | Door-Warning (Indoor door open or close) |
| Noise_Level_Futur e | High or Low | Air-Warning (ON or OFF) |
| | | Air-Notifier (Red or Blue) |
| | | Door-Warning (Indoor door open or close) |

### User IoT device 300

The IoT device 300, as illustrated in FIG. 5, may include an IoT communication module 310, an IoT sensor 320, and an IoT actuator 330.

The IoT communication module 310 may establish a communication connection with the first edge communication module of the edge device 200. The communication connection may include a connection based on wired communication and a connection based on wireless communication.

The IoT sensor 320 may sense indoor and outdoor environments of the space D (S4) to measure pieces of time-series user IoT data (environmental factors) and may transmit the measured pieces of user IoT data to the edge device 200 through the IoT communication module 310.

Examples of the IoT sensor 320 may include a noise sensor measuring a noise index, a CO₂ sensor measuring a CO₂ concentration index, a temperature sensor measuring a temperature index, a humidity sensor measuring a humidity index, a PM measurement sensor measuring a PM index, and an illumination sensor measuring illumination.

The IoT actuator 330 may receive control information from the control module 270 of the edge device 200 through the IoT communication module 310 and may output a warning message for improving the environment of the space D or notifying warning associated with the environment of the space D, based on the received control information. Examples of the IoT actuator 330 may include a display module for displaying the warning message, a pen, a buzzer, a motor for controlling an operation of opening or closing an indoor door, and a vibration device.

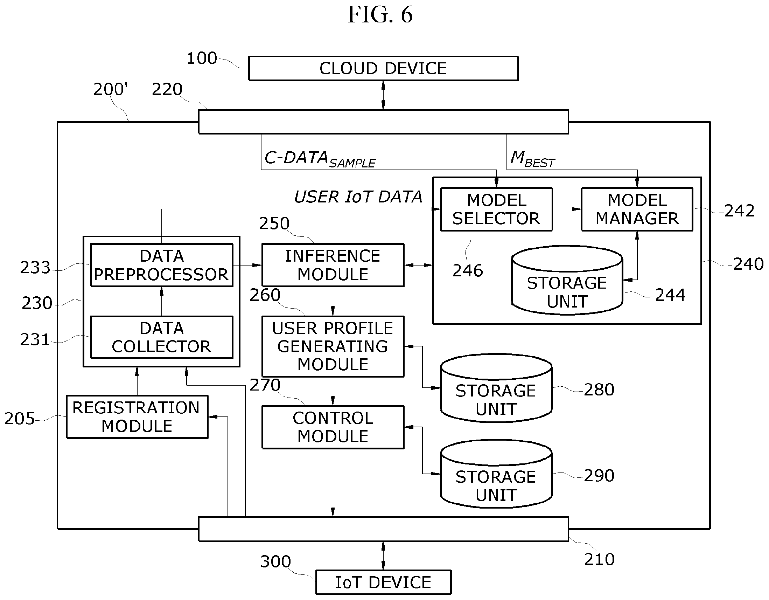

FIG. 6 is a block diagram illustrating internal elements of an edge device according to another embodiment of the present invention.

As described above, the amount of sample data transmitted from an edge device 200 to a cloud device 100 may have a tradeoff relationship with a probability that the cloud device 100 selects an optimal machine learning model (a data prediction model).

However, an arbitrary user may not desire for the edge device 200 to transmit any personal information among its own pieces of personal information (pieces of user IoT data) to the cloud device 100.

When the edge device 200 does not transmit personal information about a user to the cloud device 100 according to a user request, the cloud device 200 may not obtain information needed for selecting an optimal machine learning model M_{best}, and thus, may not select the optimal machine learning model M_{best} and may not provide the optimal machine learning model M_{best} to the edge device 200.

Therefore, an edge device 200' according to another embodiment of the present invention may include a model selector 246. In this case, the model selector 145 of the cloud device 100 illustrated in FIG. 3 may be removed.

The model selector 246 may include, as illustrated in FIG. 6, an edge model management module 240.

The model selector 246 may receive pieces of cloud sample data C-DATAₛₐₘₚₗₑ from the cloud device 100 or the data preprocessor 133 of the cloud device 100. Here, each of the pieces of cloud sample data C-DATAₛₐₘₚₗₑ may be sample data published IoT sensor data used for learning of each candidate machine learning model in the cloud device 100.

The model selector 246 may select cloud sample data C-DATAₛₐₘₚₗₑ, having a highest correlation with user IoT data preprocessed by the data preprocessor 233, from among the pieces of cloud sample data C-DATAₛₐₘₚₗₑ received from the cloud device 100 and may transfer a result of the selection to the model manager 242.

In order to reduce a time taken in selecting the cloud sample data C-DATAₛₐₘₚₗₑ, the model selector 246 may analyze a correlation between sample data (hereinafter referred to as edge sample data E-DATAₛₐₘₚₗₑ) of the user IoT data and the pieces of cloud sample data C-DATAₛₐₘₚₗₑ instead of analyzing a correlation between the user IoT data and the pieces of cloud sample data C-DATAₛₐₘₚₗₑ.

That is, the model selector 246 may select cloud sample data C-DATAₛₐₘₚₗₑ, having a highest correlation with edge sample data E-DATAₛₐₘₚₗₑ of user IoT data preprocessed by the data preprocessor 233, from among the pieces of cloud sample data C-DATAₛₐₘₚₗₑ received from the cloud device 100 and may transfer a result of the selection to the model manager 242.

In this manner, a dimension of the user IoT data compared with the pieces of cloud sample data C-DATAₛₐₘₚₗₑ may decrease to a dimension of the edge sample data E-DATAₛₐₘₚₗₑ, thereby shortening a time taken in analyzing a correlation.

The model manager 242 may request a machine learning model (a data prediction model), generated by learning published IoT data including the selected cloud sample data C-DATAₛₐₘₚₗₑ, from the cloud device 100 or the cloud model management module 140 of the cloud device 100, based on the selection result.

The cloud device 100 or the cloud model management model 140 may transmit a machine learning model, requested by the model manager 242 among a plurality of candidate machine learning models built by learning published pieces of IoT sensor data, as an optimal machine learning model M_{best} to the model manager 242.

The model manager 242 may store the optimal machine learning model M_{best}, transmitted from the cloud device 100 or the cloud model management module 140, in the storage unit 244, and thus, an operation of preparing for inference of the user IoT data may be completed.

Subsequently, a user IoT data inferring operation, a user profile generating operation, and a control information generating operation are respectively the same as an inference operation, a user profile generating operation, and a control information generating operation each performed by the edge device 200 of FIG. 4, and thus, their descriptions are omitted.

As described above, in the edge device 200' according to another embodiment of the present invention, any personal information may not be provided to the cloud device 100, thereby fundamentally preventing personal information about a user from being leaked.

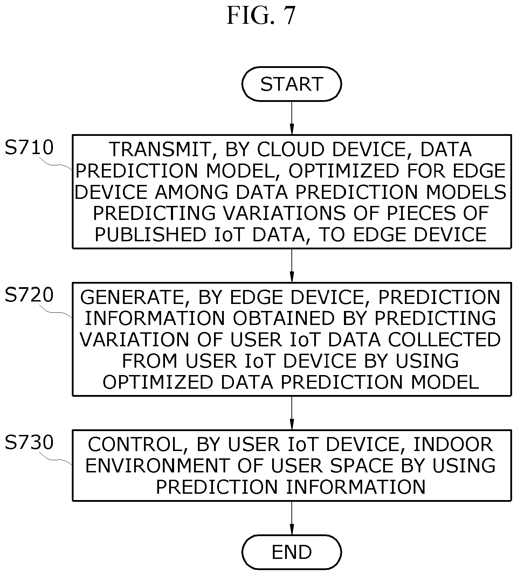

FIG. 7 is a flowchart illustrating an operating method of an edge-cloud collaboration system for analyzing IoT data, according to an embodiment of the present invention.

Referring to FIG. 7, an element for performing each operation representing the operating method of the edge-cloud collaboration system may be one of a cloud device for providing a cloud service, a user IoT device installed in a user space, and an edge device disposed between the cloud device and the user IoT device. For conveniences of description, descriptions overlapping descriptions given above with reference to FIGS. 1 to 6 will be briefly given below or are omitted.

First, in step S710, a process of transmitting, by the cloud device 100, a data prediction model, optimized for the edge device among a plurality of data prediction models predicting variations of pieces of published IoT data, to the edge device may be performed.

Subsequently, in step S720, a process of generating, by the edge device 200, prediction information obtained by predicting a variation of user IoT data collected from the user IoT device by using the optimized data prediction model and transmitting the prediction information to the user IoT device may be performed.

Subsequently, in step S730, a process of controlling, by the user IoT device, an indoor environment of the user space by using the prediction information may be performed.

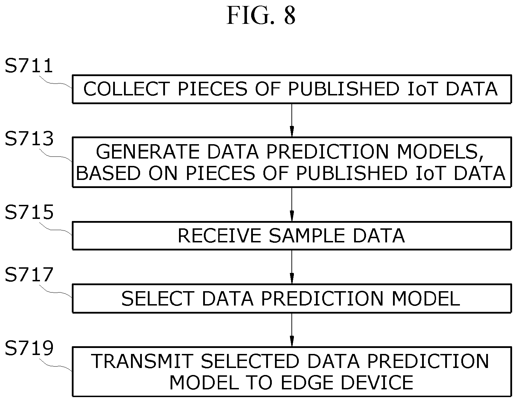

FIG. 8 is a detailed flowchart of step S710 illustrated in FIG. 7.

Referring to FIG. 8, first, in step S711, a process of collecting, by the cloud device 100 or the cloud data management module 130, the pieces of published IoT data received from IoT devices disposed in a plurality of spaces S1 to S3 may be performed.

Subsequently, in step S713, a process of learning, by the cloud device 100, the cloud model management module 140, or the model generator 141, the collected pieces of published IoT data to generate the plurality of data prediction models predicting variations of the pieces of published IoT data may be performed. A learning method may use, for example, a long short-term memory (LSTM) model.

Subsequently, in step S715, a process of receiving, by the cloud device 100, the cloud model management module 140, or the model selector 145, sample data DATAₛₐₘₚₗₑ of the user IoT data from edge device 200 may be performed. Here, the sample data DATAₛₐₘₚₗₑ may be data generated by decreasing abbreviating the user IoT data. An operation of decreasing or abbreviating data may be performed by the edge device 200 or the data preprocessor 233 of the edge device 200.

Subsequently, in step S717, a process of assigning, by the cloud device 100, the cloud model management module 140, or the model selector 145, published IoT data having a highest correlation with the received sample data among the pieces of published IoT data and selecting a data prediction model, generated by learning the assigned published IoT data, from among the plurality of data prediction models may be performed.

Subsequently, in step S719, a process of transmitting, by the cloud device 100, the cloud model management module 140, or the model selector 145, the selected data prediction model as the optimized data prediction model M_{best} to the edge device 200 may be performed.

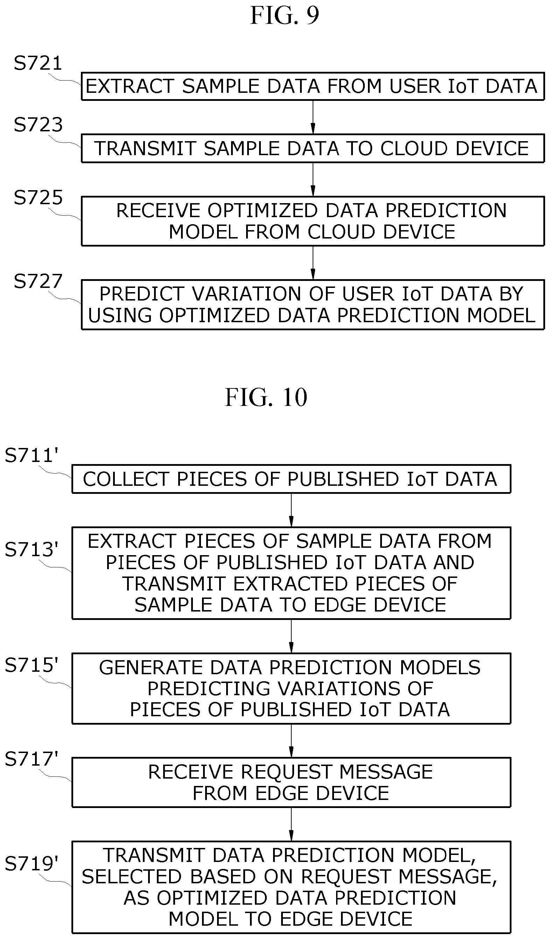

FIG. 9 is a detailed flowchart of step S720 illustrated in FIG. 7.

Referring to FIG. 9, first, in step S721, a process of extracting, by the edge device 200, the edge data management module 230, or the data preprocessor 233, the sample data DATAₛₐₘₚₗₑ from the user IoT data collected from the user IoT device 300 may be performed.

Subsequently, in step S723, a process of transmitting, by the edge device 200, the edge data management module 230, or the data preprocessor 233, the sample data DATAₛₐₘₚₗₑ to the cloud device 100 may be performed.

Subsequently, in step S725, a process of receiving, by the edge device 200, the edge model management module 240, or the model manager 242, the optimized data prediction model M_{best}, generated by learning published IoT data having a highest correlation with the sample data DATAₛₐₘₚₗₑ, from the cloud device 100 may be performed.

Subsequently, in step S727, a process of predicting, by the edge device 200, a variation of user IoT data by using the optimized data prediction model M_{best} to generate the prediction information may be performed.

FIG. 10 is another detailed flowchart of step S710 illustrated in FIG. 7.

Referring to FIG. 10, in step S711', a process of collecting, by the cloud device 100, the pieces of published IoT data received from the IoT devices disposed in the plurality of spaces S1 to S3 may be performed.

In step S713', a process of extracting, by the cloud device 100, pieces of sample data from the collected pieces of published IoT data and transmitting the extracted pieces of sample data to the edge device 200 may be performed.

In step S715', a process of learning, by the cloud device 100, the collected pieces of published IoT data to generate the plurality of data prediction models predicting variations of the pieces of published IoT data may be performed.

In step S717', a process of receiving, by the cloud device 100, a request message, requesting a data prediction model which is selected by the edge device from among the plurality of data prediction models by using the pieces of sample data, from the edge device 200 may be performed.

In step S719', a process of transmitting, by the cloud device 100, a data prediction model, selected based on the request message from among the plurality of data prediction models, as the optimized data prediction model to the edge device 200 may be performed.

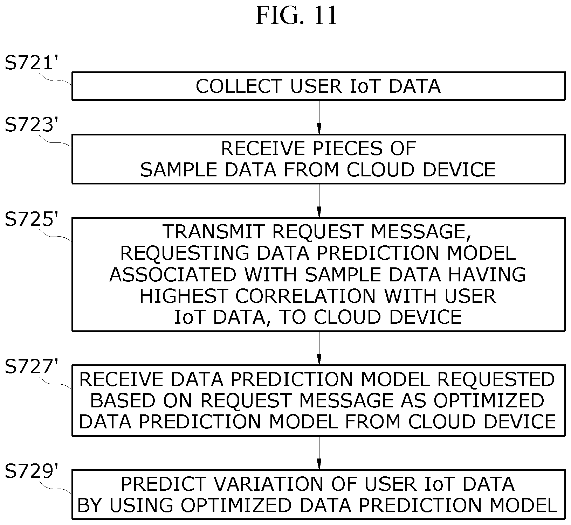

FIG. 11 is another detailed flowchart of step S720 illustrated in FIG. 7.

Referring to FIG. 11, in step S721', a process of collecting, by the edge device 200, the user IoT data from the user IoT device may be performed.

Subsequently, in step S723', a process of receiving, by the edge device 200, the pieces of sample data, extracted from the pieces of published IoT data, from the cloud device 100 may be performed.

Subsequently, in step S725', a process of assigning, by the edge device 200, sample data having a highest correlation with the user IoT data among the received pieces of sample data and transmitting a request message, requesting a data prediction model generated by learning published IoT data including the assigned sample data among the plurality of data prediction models, to the cloud device 100 may be performed. The request message transmitted to the cloud device 100 may include identification information about the requested data prediction model and may not include any information associated with the user IoT data. Therefore, personal information about a user may be fundamentally prevented from being leaked to the outside through cloud device 100. Although not described above in detail, the cloud device 100 may generate a plurality of data prediction models, assign identification information to each of the data prediction models, and provide the edge device 200 with the identification information assigned to each of the data prediction models.

Subsequently, in step S727', a process of receiving, by the edge device 200, the data prediction model requested based on the request message as the optimized data prediction model from the cloud device 100 may be performed.

Subsequently, in step S729', a process of generating the prediction information predicting the variation of the user IoT data by using the optimized data prediction model may be performed.

As described above, according to the embodiments of the present invention, since user IoT data used by an edge device is not transmitted to a cloud device or a portion (for example, sample data) of the user IoT data is transmitted to the cloud device, personal information about a user may be protected.

Moreover, according to the embodiments of the present invention, since the cloud device does not provide the edge device with all data prediction models built for predicting a change in an indoor environment but provides the edge device with only an optimized data prediction model, the edge device may store only the optimized data prediction model, thereby preventing the waste of a storage space associated with a performance of the edge device.

Moreover, according to the embodiments of the present invention, since the edge device predicts a change in an indoor environment by using only an optimized data prediction model, the edge device may quickly provide a user with a prediction result obtained by predicting the change in the indoor environment regardless of processing performance, and thus, may analyze IoT data in real time.

A number of exemplary embodiments have been described and the scope of protection is defined by the appended set of claims.

## Claims

1. An operating method of an edge-cloud collaboration system which analyzes Internet of Things (IoT) data and includes a cloud device providing a cloud service, a user loT device installed in a user space, and an edge device disposed between the cloud device and the user loT device, the operating method comprising:
transmitting, by the cloud device, a data prediction model, optimized for the edge device among a plurality of data prediction models predicting variations of pieces of published loT data, to the edge device (S710), wherein the plurality of data prediction models are generated (S713) by the cloud device by learning published loT data collected (S711) by the cloud device, wherein the optimized data prediction model is selected (S717) from among the plurality of data prediction models by assigning, by the cloud device or edge device, published loT data having a highest correlation with sample data of the user loT data, received by the cloud device or edge device (S715), among the pieces of published loT data, and wherein the selected data prediction model is transmitted, by the cloud device, as the optimized data prediction model to the edge device (S719);
generating (S720), by the edge device, prediction information obtained by predicting a variation of user loT data collected from the user loT device by using the optimized data prediction model and transmitting the prediction information to the user loT device; and
controlling (S730), by the user loT device, an indoor environment of the user space by using the prediction information.

2. The operating method of claim 1, wherein the transmitting of the optimized data prediction model comprises:
collecting, by the cloud device, the pieces of published loT data received from loT devices disposed in a plurality of spaces;
receiving, by the cloud device, sample data of the user loT data from edge device; and
assigning, by the cloud device, published loT data having a highest correlation with the received sample data among the pieces of published loT data and selecting a data prediction model, generated by learning the assigned published loT data, from among the plurality of data prediction models; and
transmitting, by the cloud device, the selected data prediction model as the optimized data prediction model to the edge device.

3. The operating method of claim 1, wherein the transmitting of the prediction information comprises:
extracting, by the edge device, the sample data from the user loT data collected from the user loT device (S721);
transmitting, by the edge device, the sample data to the cloud device (S723);
receiving, by the edge device, the optimized data prediction model, generated by learning published loT data having a highest correlation with the sample data, from the cloud device (S725); and
predicting, by the edge device, the variation of the user loT data by using the optimized data prediction model to generate the prediction information (S727).

4. The operating method of claim 3, wherein the generating of the prediction information comprises:
predicting the variation of the user loT data to generate a prediction result corresponding to an environment change of the user space;
profiling, by the edge device, the prediction result to generate a user profile;
converting the user profile, by the edge device, into control information controlling an operation of an actuator included in the user loT device by using a previously stored actuator table; and
transmitting, by the edge device, the control information as the prediction information to the user loT device.

5. The operating method of claim 1, wherein the transmitting of the optimized data prediction model comprises:
collecting, by the cloud device, the pieces of published loT data received from loT devices disposed in a plurality of spaces (S711');
extracting, by the cloud device, pieces of sample data from the collected pieces of published loT data and transmitting the extracted pieces of sample data to the edge device (S713');
receiving, by the cloud device, a request message, requesting a data prediction model which is selected by the edge device from among the plurality of data prediction models by using the pieces of sample data, from the edge device (S717); and
transmitting, by the cloud device, a data prediction model, selected by the edge device from among the plurality of data prediction models, as the optimized data prediction model to the edge device according to the request message (S719').

6. The operating method of claim 1, wherein the transmitting of the prediction information to the user loT device comprises:
collecting, by the edge device, the user loT data from the user loT device (S721');
receiving, by the edge device, pieces of sample data, extracted from the pieces of published loT data, from the cloud device (S723');
assigning, by the edge device, sample data having a highest correlation with the user loT data among the received pieces of sample data and transmitting a request message, requesting a data prediction model generated by learning published loT data including the assigned sample data among the plurality of data prediction models, to the cloud device (S725');
receiving, by the edge device, the data prediction model requested based on the request message as the optimized data prediction model from the cloud device (S727'); and
generating the prediction information predicting the variation of the user loT data by using the optimized data prediction model (S729').

7. An edge-cloud collaboration system for analyzing Internet of Things (IoT) data to predict a variation of user loT data measured by a user loT device provided in a user space, the edge-cloud collaboration system comprising:
a cloud device (100) configured to generate a plurality of data prediction models for predicting an indoor environment change of each of a plurality of external spaces (S1, S2, S3) having indoor environments differing from an indoor environment of the user space (S4), based on pieces of published loT data distributed by a plurality of loT devices (300) respectively provided in the plurality of external spaces (S1, S2, S3) and select a data prediction model, optimized for predicting an indoor environment change of the user space, from among the plurality of data prediction models by assigning published loT data having a highest correlation with sample data of the user loT data among the pieces of published loT data; and
an edge device (200) configured to extract the sample data from the user loT data collected from the user loT device, transmit the sample data to the cloud device (100), receive the selected optimized data prediction model from the cloud device (100), predict a variation of the user loT data by using the optimized data prediction model, and predict the indoor environment change of the user space (S4), based on a prediction result obtained by predicting the variation of the user loT data.

8. The edge-cloud collaboration system of claim 7, wherein the cloud device (100) comprises:
a cloud communication module (110, 120) configured to communicate with the plurality of loT devices (300) and the edge device (200) by wire or wirelessly to receive the sample data from the edge device (200);
a cloud data management module (130) configured to collect the pieces of published loT data received through the cloud communication module (110, 120); and
a cloud model management module (140) configured to learn the pieces of published loT data input from the cloud data management module (130) to generate the plurality of data prediction models, and compare the pieces of published loT data with the sample data received through the cloud communication module (110, 120) to select the optimized data prediction model.

9. The edge-cloud collaboration system of claim 7, wherein the edge device (200) comprises:
an edge communication module (210, 220) configured to communicate with each of the user loT device (300) and the cloud device (100);
an edge data management module (230) configured to collect the user loT data received from the user loT device (300) through the edge communication module (210, 220) and transmit the sample data, generated by decreasing a dimension of the collected user loT data, to the cloud device (100) through the edge communication module (210, 220);
an edge model management module (240) configured to request the optimized data prediction model from the cloud device (100) through the edge communication module (210, 220) and receive the optimized data prediction model from the cloud device (100) through the edge communication module (210, 220) to store the optimized data prediction model; and
an inference model (250) configured to predict the variation of the user loT data by using the optimized data prediction model stored in the edge model management module (240).

10. An edge-cloud collaboration system for analyzing Internet of Things (IoT) data to predict a variation of user loT data measured by a user loT device (300) provided in a user space (S4), the edge-cloud collaboration system comprising:
a cloud device (100) configured to generate a plurality of data prediction models for predicting an indoor environment change of each of a plurality of external spaces having indoor environments differing from an indoor environment of the user space, based on pieces of published loT data distributed by a plurality of loT devices (300) respectively provided in the plurality of external spaces (S1, S2, S3) and generate pieces of sample data generated by decreasing dimensions of the pieces of published loT data; and
an edge device (200) configured to receive the pieces of sample data from the cloud device (100), select a data prediction model, optimized for predicting an indoor environment change of the user space (S4), from among the plurality of data prediction models by using sample data having a highest correlation with received sample data of the user loT data collected from the user loT device (300) among the pieces of sample data, transmit a request message requesting the selected optimized data prediction model to the cloud device (100), receive the optimized data prediction model from the cloud device (100) receiving the request message, predict the variation of the user loT data by using the received optimized data prediction model, and predict the indoor environment change of the user space, based on a prediction result obtained by predicting the variation of the user loT data.

11. The edge-cloud collaboration system of claim 10, wherein the cloud device (100) comprises:
a cloud communication module (110, 120) configured to communicate with the plurality of loT devices (300) and the edge device (200) by wire or wirelessly to receive the request message from the edge device (200);
a cloud data management module (130) configured to collect the pieces of published loT data received through the cloud communication module (110, 120); and
a cloud model management module (140) configured to learn the pieces of published loT data input from the cloud data management module (130) to generate the plurality of data prediction models, and transmit an optimal data prediction model, selected based on the request message from among the plurality of data prediction models, to the edge device (200) through the cloud communication module (110, 120).

12. The edge-cloud collaboration system of claim 10, wherein the edge device (200) comprises:
an edge communication module (210, 220) configured to communicate with each of the user loT device (300) and the cloud device (100);
an edge data management module (230) configured to collect the user loT data from the user loT device (300) through the edge communication module (210, 220);
an edge model management module (240) configured to receive the pieces of sample data from the cloud device (100) through the edge communication module (210, 220), assign sample data having a highest correlation with the user loT data input from the edge data management module (230) among the pieces of sample data, select a data prediction model, learned based on published loT data including the assigned sample data, as the optimized data prediction model from among the plurality of data prediction models, and transmit the request message requesting the selected optimized data prediction model to the cloud device (100); and
an inference model (250) configured to receive the optimized data prediction model from the cloud device (100) receiving the request message and predict the variation of the user loT data by using the received optimized data prediction model.

## Patentansprüche

1. Betriebsverfahren eines Edge-Cloud-Zusammenarbeit-Systems, das Daten des Internets der Dinge (Internet of Things; IoT) analysiert und ein Cloud-Gerät, das einen Cloud-Dienst bereitstellt, ein IoT-Benutzergerät, das in einem Benutzerraum installiert ist, und ein Edge-Gerät, das zwischen dem Cloud-Gerät und dem IoT-Benutzergerät angeordnet ist, aufweist, wobei das Betriebsverfahren umfasst:
Übertragen, durch das Cloud-Gerät, eines Datenvorhersagemodells, das für das Edge-Gerät optimiert ist, unter mehreren Datenvorhersagemodellen, die Abweichungen von Elementen veröffentlichter IoT-Daten vorhersagen, an das Edge-Gerät (S710), wobei die mehreren Datenvorhersagemodelle durch das Cloud-Gerät erzeugt werden (S713), indem veröffentlichte IoT-Daten gelernt werden, die durch das Cloud-Gerät gesammelt werden (S711), wobei das optimierte Datenvorhersagemodell aus den mehreren Datenvorhersagemodellen ausgewählt wird (S717), indem, durch das Cloud-Gerät oder das Edge-Gerät, veröffentlichte IoT-Daten, die eine höchste Korrelation mit Probedaten der IoT-Benutzerdaten aufweisen, die von dem Cloud-Gerät oder Edge-Gerät empfangen werden (S715), unter den Elementen veröffentlichter IoT-Daten zugeordnet werden, und wobei das ausgewählte Datenvorhersagemodell durch das Cloud-Gerät als das optimierte Datenvorhersagemodell an das Edge-Gerät übertragen wird (S719);
Erzeugen (S720), durch das Edge-Gerät, von Vorhersageinformationen, die erhalten werden, indem eine Abweichung von IoT-Benutzerdaten, die von dem IoT-Benutzergerät gesammelt werden, unter Verwendung eines Datenvorhersagemodells vorhergesagt werden, und Übertragen der Vorhersageinformationen an das IoT-Benutzergerät; und
Steuern (S730), durch das IoT-Benutzergerät, einer Innenumgebung des Benutzerraums unter Verwendung der Vorhersageinformationen.

2. Betriebsverfahren nach Anspruch 1, wobei das Übertragen des optimierten Datenvorhersagemodells umfasst:
Sammeln, durch das Cloud-Gerät, der Elemente veröffentlichter IoT-Daten, die von in mehreren Räumen angeordneten IoT-Geräten empfangen werden;
Empfangen, durch das Cloud-Gerät, von Probedaten der IoT-Benutzerdaten von dem Edge-Gerät; und
Zuordnen, durch das Cloud-Gerät, veröffentlichter IoT-Daten, die eine höchste Korrelation mit den empfangenen Probedaten aufweisen, unter den Elementen veröffentlichter IoT-Daten und Auswählen eines Datenvorhersagemodells, das erzeugt wird, indem die zugeordneten veröffentlichten IoT-Daten gelernt werden, aus den mehreren Datenvorhersagemodellen; und
Übertragen, durch das Cloud-Gerät, des ausgewählten Datenvorhersagemodells als das optimierte Datenvorhersagemodell an das Edge-Gerät.

3. Betriebsverfahren nach Anspruch 1, wobei das Übertragen der Vorhersageinformationen umfasst:
Extrahieren, durch das Edge-Gerät, der Probedaten aus den IoT-Benutzerdaten, die von dem IoT-Benutzergerät gesammelt werden (S721);
Übertragen, durch das Edge-Gerät, der Probedaten an das Cloud-Gerät (S723);
Empfangen, durch das Edge-Gerät, des optimierten Datenvorhersagemodells, das erzeugt wird, indem veröffentlichte IoT-Daten, die eine höchste Korrelation mit den Probedaten aufweisen, gelernt werden, von dem Cloud-Gerät (S725); und
Vorhersagen, durch das Edge-Gerät, der Abweichung der IoT-Benutzerdaten unter Verwendung des optimierten Datenvorhersagemodells, um die Vorhersageinformationen zu erzeugen (S727).

4. Betriebsverfahren nach Anspruch 3, wobei das Erzeugen der Vorhersageinformationen umfasst:
Vorhersagen der Abweichung der IoT-Benutzerdaten, um ein Vorhersageergebnis entsprechend einer Umgebungsänderung des Benutzerraums zu erzeugen;
Profilieren, durch das Edge-Gerät, des Vorhersageergebnisses, um ein Benutzerprofil zu erzeugen; Umwandeln des Benutzerprofils, durch das Edge-Gerät, in Steuerinformationen, die einen Betrieb eines in dem IoT-Benutzergerät enthaltenen Aktors zu steuern, unter Verwendung einer zuvor gespeicherten Aktortabelle; und
Übertragen, durch das Edge-Gerät, der Steuerinformationen als die Vorhersageinformationen an das IoT-Benutzergerät.

5. Betriebsverfahren nach Anspruch 1, wobei das Übertragen des optimierten Datenvorhersagemodells umfasst:
Sammeln, durch das Cloud-Gerät, der Elemente veröffentlichter IoT-Daten, die von in mehreren Räumen angeordneten IoT-Geräten empfangen werden (S711');
Extrahieren, durch das Cloud-Gerät, von Elementen von Probedaten aus den gesammelten Elementen veröffentlichter IoT-Daten und Übertragen der extrahierten Elemente von Probedaten an das Edge-Gerät (S713');
Empfangen, durch das Cloud-Gerät, einer Anforderungsnachricht, die ein Datenvorhersagemodell anfordert, das durch das Edge-Gerät aus den mehreren Datenvorhersagemodellen unter Verwendung der Elemente von Probedaten ausgewählt wird, von dem Edge-Gerät (S717'); und Übertragen, durch das Cloud-Gerät, eines Datenvorhersagemodells, das durch das Edge-Gerät aus den mehreren Datenvorhersagemodellen ausgewählt wird, als das optimierte Datenvorhersagemodell an das Edge-Gerät gemäß der Anforderungsnachricht (S719').

6. Betriebsverfahren nach Anspruch 1, wobei das Übertragen der Vorhersageinformationen an das IoT-Benutzergerät umfasst:
Sammeln, durch das Edge-Gerät, der IoT-Benutzerdaten von dem IoT-Benutzergerät (S721');
Empfangen, durch das Edge-Gerät, von Elementen von Probedaten, die aus den Elementen veröffentlichter IoT-Daten extrahiert werden, von dem Cloud-Gerät (S723');
Zuordnen, durch das Edge-Gerät, von Probedaten, die eine höchste Korrelation mit den IoT-Benutzerdaten aufweisen, unter den empfangenen Elementen von Probedaten und Übertragen einer Anforderungsnachricht, die ein Datenvorhersagemodell, das erzeugt wird, indem veröffentlichte IoT-Daten einschließlich der zugeordneten Probedaten gelernt werden, unter den mehreren Datenvorhersagemodellen anfordert, an das Cloud-Gerät (S725');
Empfangen, durch das Edge-Gerät, des Datenvorhersagemodells, das basierend auf der Anforderungsnachricht angefordert wurde, als das optimierte Datenvorhersagemodell von dem Cloud-Gerät (S727'); und
Erzeugen der Vorhersageinformationen, welche die Abweichung der IoT-Benutzerdaten unter Verwendung des optimierten Datenvorhersagemodells vorhersagen (S729').

7. Edge-Cloud-Zusammenarbeit-System zum Analysieren von Daten des Internets der Dinge (Internet of Things; IoT), um eine Abweichung von IoT-Benutzerdaten vorherzusagen, die durch ein IoT-Benutzergerät gemessen werden, das in einem Benutzerraum vorgesehen ist, wobei das Edge-Cloud-Zusammenarbeit-System umfasst:
ein Cloud-Gerät (100), das eingerichtet ist, um mehrere Datenvorhersagemodelle zum Vorhersagen einer Innenumgebungsänderung von jedem von mehreren Außenräumen (S1, S2, S3) mit Innenumgebungen, die von einer Innenumgebung des Benutzerraums (S4) abweichen, basierend auf Elementen veröffentlichter IoT-Daten, die durch mehrere IoT-Geräte (300) verteilt sind, die jeweils in den mehreren Außenräumen (S1, S2, S3) vorgesehen sind, zu erzeugen und um ein Datenvorhersagemodell, das zum Vorhersagen einer Innenumgebungsänderung des Benutzerraums optimiert ist, aus den mehreren Datenvorhersagemodellen auszuwählen, indem es veröffentlichte IoT-Daten, die eine höchste Korrelation mit Probedaten der IoT-Benutzerdaten aufweisen, unter den Elementen veröffentlichter IoT-Daten zuordnet; und
ein Edge-Gerät (200), das eingerichtet ist, um die Probedaten aus den IoT-Benutzerdaten zu extrahieren, die von dem IoT-Benutzergerät gesammelt werden, um die Probedaten an das Cloud-Gerät (100) zu übertragen, um das ausgewählte optimierte Datenvorhersagemodell von dem Cloud-Gerät (100) zu empfangen, um eine Abweichung der IoT-Benutzerdaten unter Verwendung des optimierten Datenvorhersagemodells vorherzusagen und um die Innenumgebungsänderung des Benutzerraums (S4) basierend auf einem Vorhersageergebnis vorherzusagen, das durch Vorhersagen der der Abweichung der IoT-Benutzerdaten erhalten wird.

8. Edge-Cloud-Zusammenarbeit-System nach Anspruch 7, wobei das Cloud-Gerät (100) umfasst:
ein Cloud-Kommunikationsmodul (110, 120), das eingerichtet ist, um mit den mehreren IoT-Geräten (300) und dem Edge-Gerät (200) drahtgebunden oder drahtlos zu kommunizieren, um die Probedaten von dem Edge-Gerät (200) zu empfangen;
ein Cloud-Datenverwaltungsmodul (130), das eingerichtet ist, um die Elemente veröffentlichter IoT-Daten zu sammeln, die über das Cloud-Kommunikationsmodul (110, 120) empfangen werden; und
ein Cloud-Modellverwaltungsmodul (140), das eingerichtet ist, um die Elemente veröffentlichter IoT-Daten zu lernen, die von dem Cloud-Datenverwaltungsmodul (130) eingegeben werden, um die mehreren Datenvorhersagemodelle zu erzeugen, und um die Elemente veröffentlichter IoT-Daten mit den Probedaten zu vergleichen, die über das Cloud-Kommunikationsmodul (110, 120) empfangen werden, um das optimierte Datenvorhersagemodell auszuwählen.

9. Edge-Cloud-Zusammenarbeit-System nach Anspruch 7, wobei das Edge-Gerät (200) umfasst:
ein Edge-Kommunikationsmodul (210, 220), das eingerichtet ist, um mit jedem der IoT-Benutzergeräte (300) und dem Cloud-Gerät (100) zu kommunizieren;
ein Edge-Datenverwaltungsmodul (230), das eingerichtet ist, um die IoT-Benutzerdaten zu sammeln, die von dem IoT-Benutzergerät (300) über das Edge-Kommunikationsmodul (210, 220) empfangen werden, und um die Probedaten, die durch Verringern einer Dimension der gesammelten IoT-Benutzerdaten erzeugt werden, an das Cloud-Gerät (100) über das Edge-Kommunikationsmodul (210, 220) zu übertragen;
ein Edge-Modellverwaltungsmodul (240), das eingerichtet ist, um das optimierte Datenvorhersagemodell von dem Cloud-Gerät (100) über das Edge-Kommunikationsmodul (210, 220) anzufordern und um das optimierte Datenvorhersagemodell von dem Cloud-Gerät (100) über das Edge-Kommunikationsmodul (210, 220) zu empfangen, um das optimierte Datenvorhersagemodell zu speichern; und
ein Inferenzmodell (250), das eingerichtet ist, um die Abweichung der IoT-Benutzerdaten unter Verwendung des optimierten Datenvorhersagemodells, das in dem Edge-Modellverwaltungsmodul (240) gespeichert ist, vorherzusagen.

10. Edge-Cloud-Zusammenarbeit-System zum Analysieren von Daten des Internets der Dinge (Internet of Things; IoT), um eine Abweichung von IoT-Benutzerdaten vorherzusagen, die durch ein IoT-Benutzergerät (300) gemessen werden, das in einem Benutzerraum (S4) vorgesehen ist, wobei das Edge-Cloud-Zusammenarbeit-System umfasst:
ein Cloud-Gerät (100), das eingerichtet ist, um mehrere Datenvorhersagemodelle zum Vorhersagen einer Innenumgebungsänderung von jedem von mehreren Außenräumen mit Innenumgebungen, die von einer Innenumgebung des Benutzerraums abweichen, basierend auf Elementen veröffentlichter IoT-Daten, die durch mehrere IoT-Geräte (300) verteilt sind, die jeweils in den mehreren Außenräumen (S1, S2, S3) vorgesehen sind, zu erzeugen und um Elemente von Probedaten zu erzeugen, die durch Verringern von Dimensionen der Elemente veröffentlichter IoT-Daten erzeugt werden; und
ein Edge-Gerät (200), das eingerichtet ist, um die Elemente von Probedaten von dem Cloud-Gerät (100) zu empfangen, um ein Datenvorhersagemodell, das zum Vorhersagen einer Innenumgebungsänderung des Benutzerraums (S4) optimiert ist, aus den mehreren Datenvorhersagemodellen unter Verwendung von Probedaten, die eine höchste Korrelation mit empfangenen Probedaten der IoT-Benutzerdaten aufweisen, die von dem IoT-Benutzergerät (300) gesammelt werden, unter den Elementen von Probedaten auszuwählen, um eine Anforderungsnachricht, die das ausgewählte Datenvorhersagemodell anfordert, an das Cloud-Gerät (100) zu übertragen, um das optimierte Datenvorhersagemodell von dem Cloud-Gerät (100), das die Anforderungsnachricht empfängt, zu empfangen, um die Abweichung der IoT-Benutzerdaten unter Verwendung des empfangenen optimierten Datenvorhersagemodells vorherzusagen und um die Innenumgebungsänderung des Benutzerraums basierend auf einem Vorhersageergebnis vorherzusagen, das durch Vorhersagen der Abweichung der IoT-Benutzerdaten erhalten wird.

11. Edge-Cloud-Zusammenarbeit-System nach Anspruch 10, wobei das Cloud-Gerät (100) umfasst:
ein Cloud-Kommunikationsmodul (110, 120), das eingerichtet ist, um mit den mehreren IoT-Geräten (300) und dem Edge-Gerät (200) drahtgebunden oder drahtlos zu kommunizieren, um die Anforderungsnachricht von dem Edge-Gerät (200) zu empfangen;
ein Cloud-Datenverwaltungsmodul (130), das eingerichtet ist, um die Elemente veröffentlichter IoT-Daten zu sammeln, die über das Cloud-Kommunikationsmodul (110, 120) empfangen werden; und
ein Cloud-Modellverwaltungsmodul (140), das eingerichtet ist, um die Elemente veröffentlichter IoT-Daten zu lernen, die von dem Cloud-Datenverwaltungsmodul (130) eingegeben werden, um die mehreren Datenvorhersagemodelle zu erzeugen, und um ein optimales Datenvorhersagemodell, das basierend auf der Anforderungsnachricht aus den mehreren Datenvorhersagemodellen ausgewählt wird, an das Edge-Gerät (200) über das Cloud-Kommunikationsmodul (110, 120) zu übertragen.

12. Edge-Cloud-Zusammenarbeit-System nach Anspruch 10, wobei das Edge-Gerät (200) umfasst:
ein Edge-Kommunikationsmodul (210, 220), das eingerichtet ist, um mit jedem der IoT-Benutzergeräte (300) und dem Cloud-Gerät (100) zu kommunizieren;
ein Edge-Datenverwaltungsmodul (230), das eingerichtet ist, um die IoT-Benutzerdaten von dem IoT-Benutzergerät (300) über das Edge-Kommunikationsmodul (210, 220) zu sammeln;
ein Edge-Modellverwaltungsmodul (240), das eingerichtet ist, um die Elemente von Probedaten von dem Cloud-Gerät (100) über das Edge-Kommunikationsmodul (210, 220) zu empfangen, um Probedaten, die eine höchste Korrelation mit den IoT-Benutzerdaten aufweisen, die von dem Edge-Datenverwaltungsmodul (230) eingegeben werden, unter den Elementen von Probedaten zuzuordnen, um ein Datenvorhersagemodell, das basierend auf veröffentlichten IoT-Daten einschließlich den zugeordneten Probedaten gelernt wird, als das optimierte Datenvorhersagemodell aus den mehreren Datenvorhersagemodellen auszuwählen und um die Anforderungsnachricht, die das ausgewählte optimierte Datenvorhersagemodell anfordert, an das Cloud-Gerät (100) zu übertragen; und
ein Inferenzmodell (250), das eingerichtet ist, um das optimierte Datenvorhersagemodell von dem Cloud-Gerät (100) zu empfangen, das die Anforderungsnachricht empfängt, und um die Abweichung der IoT-Benutzerdaten unter Verwendung des empfangenen optimierten Datenvorhersagemodells vorherzusagen.

## Revendications

1. Procédé de fonctionnement d'un système de collaboration périphérie-nuage qui analyse des données de l'Internet des objets (IoT) et comporte un dispositif en nuage fournissant un service en nuage, un dispositif IoT utilisateur installé dans un espace utilisateur, et un dispositif en périphérie disposé entre le dispositif en nuage et le dispositif IoT utilisateur, le procédé de fonctionnement comprenant :
la transmission, par le dispositif en nuage, d'un modèle de prédiction de données, optimisé pour le dispositif en périphérie parmi une pluralité de modèles de prédiction de données prédisant des variations d'éléments de données IoT publiées, au dispositif en périphérie (S710), dans lequel la pluralité de modèles de prédiction de données sont générés (S713) par le dispositif en nuage par l'apprentissage de données IoT publiées collectées (S711) par le dispositif en nuage, dans lequel le modèle de prédiction de données optimisé est sélectionné (S717) parmi la pluralité de modèles de prédiction de données par l'attribution, par le dispositif en nuage ou le dispositif en périphérie, de données IoT publiées ayant une corrélation la plus élevée avec des données d'échantillon des données IoT utilisateur, reçues par le dispositif en nuage ou le dispositif en périphérie (S715), parmi les éléments de données IoT publiées, et dans lequel le modèle de prédiction de données sélectionné est transmis, par le dispositif en nuage, en tant que modèle de prédiction de données optimisé au dispositif en périphérie (S719) ;
la génération (S720), par le dispositif en périphérie, d'informations de prédiction obtenues par la prédiction d'une variation de données IoT utilisateur collectées depuis le dispositif IoT utilisateur par l'utilisation du modèle de prédiction de données optimisé et la transmission des informations de prédiction au dispositif IoT utilisateur ; et
la commande (S730), par le dispositif IoT utilisateur, d'un environnement intérieur de l'espace utilisateur par l'utilisation des informations de prédiction.

2. Procédé de fonctionnement selon la revendication 1, dans lequel la transmission du modèle de prédiction de données optimisé comprend :
la collecte, par le dispositif en nuage, des éléments de données IoT publiées reçues depuis des dispositifs IoT disposés dans une pluralité d'espaces ;
la réception, par le dispositif en nuage, de données d'échantillon des données IoT utilisateur depuis le dispositif en périphérie ; et
l'attribution, par le dispositif en nuage, de données IoT publiées ayant une corrélation la plus élevée avec les données d'échantillon reçues parmi les éléments de données IoT publiées et la sélection d'un modèle de prédiction de données, généré par l'apprentissage des données IoT publiées attribuées, parmi la pluralité de modèles de prédiction de données ; et
la transmission, par le dispositif en nuage, du modèle de prédiction de données sélectionné en tant que modèle de prédiction de données optimisé au dispositif en périphérie.

3. Procédé de fonctionnement selon la revendication 1, dans lequel la transmission des informations de prédiction comprend :
l'extraction, par le dispositif en périphérie, des données d'échantillon depuis les données IoT utilisateur collectées depuis le dispositif IoT utilisateur (S721) ;
la transmission, par le dispositif en périphérie, des données d'échantillon au dispositif en nuage (S723) ;
la réception, par le dispositif en périphérie, du modèle de prédiction de données optimisé, généré par l'apprentissage de données IoT publiées ayant une corrélation la plus élevée avec les données d'échantillon, depuis le dispositif en nuage (S725) ; et
la prédiction, par le dispositif en périphérie, de la variation des données IoT utilisateur par l'utilisation du modèle de prédiction de données optimisé pour générer les informations de prédiction (S727).

4. Procédé de fonctionnement selon la revendication 3, dans lequel la génération des informations de prédiction comprend :
la prédiction de la variation des données IoT utilisateur pour générer un résultat de prédiction correspondant à un changement d'environnement de l'espace utilisateur ;
le profilage, par le dispositif en périphérie, du résultat de prédiction pour générer un profil utilisateur ;
la conversion du profil utilisateur, par le dispositif en périphérie, en informations de commande commandant un fonctionnement d'un actionneur inclus dans le dispositif IoT utilisateur par l'utilisation d'une table d'actionneur stockée précédemment ; et
la transmission, par le dispositif en périphérie, des informations de commande en tant qu'informations de prédiction au dispositif IoT utilisateur.

5. Procédé de fonctionnement selon la revendication 1, dans lequel la transmission du modèle de prédiction de données optimisé comprend :
la collecte, par le dispositif en nuage, des éléments de données IoT publiées reçus depuis des dispositifs IoT disposés dans une pluralité d'espaces (S711') ;
l'extraction, par le dispositif en nuage, d'éléments de données d'échantillon depuis les éléments collectés de données IoT publiées et la transmission des éléments extraits de données d'échantillon au dispositif en périphérie (S713') ;
la réception, par le dispositif en nuage, d'un message de demande, demandant un modèle de prédiction de données qui est sélectionné par le dispositif en périphérie parmi la pluralité de modèles de prédiction de données par l'utilisation des éléments de données d'échantillon, depuis le dispositif en périphérie (S717) ; et
la transmission, par le dispositif en nuage, d'un modèle de prédiction de données, sélectionné par le dispositif en périphérie parmi la pluralité de modèles de prédiction de données, en tant que modèle de prédiction de données optimisé au dispositif en périphérie selon le message de demande (S719').

6. Procédé de fonctionnement selon la revendication 1, dans lequel la transmission des informations de prédiction au dispositif IoT utilisateur comprend :
la collecte, par le dispositif en périphérie, des données IoT utilisateur depuis le dispositif IoT utilisateur (S721') ;
la réception, par le dispositif en périphérie, d'éléments de données d'échantillon, extraits depuis les éléments de données IoT publiées, depuis le dispositif en nuage (S723');
l'attribution, par le dispositif en périphérie, de données d'échantillon ayant une corrélation la plus élevée avec les données IoT utilisateur parmi les éléments reçus de données d'échantillon et la transmission d'un message de demande, demandant un modèle de prédiction de données généré par l'apprentissage de données IoT publiées incluant les données d'échantillon attribuées parmi la pluralité de modèles de prédiction de données, au dispositif en nuage (S725') ;
la réception, par le dispositif en périphérie, du modèle de prédiction de données demandé d'après le message de demande en tant que modèle de prédiction de données optimisé depuis le dispositif en nuage (S727') ; et
la génération des informations de prédiction prédisant la variation des données IoT utilisateur par l'utilisation du modèle de prédiction de données optimisé (S729').

7. Système de collaboration périphérie-nuage permettant d'analyser des données de l'Internet des objets (IoT) pour prédire une variation de données IoT utilisateur mesurées par un dispositif IoT utilisateur fourni dans un espace utilisateur, le système de collaboration périphérie-nuage comprenant :
un dispositif en nuage (100) configuré pour générer une pluralité de modèles de prédiction de données permettant de prédire un changement d'environnement intérieur de chacun d'une pluralité d'espaces externes (S1, S2, S3) ayant des environnements intérieurs différents d'un environnement intérieur de l'espace utilisateur (S4), d'après des éléments de données IoT publiées distribués par une pluralité de dispositifs IoT (300) fournis respectivement dans la pluralité d'espaces externes (S1, S2, S3) et sélectionner un modèle de prédiction de données, optimisé pour prédire un changement d'environnement intérieur de l'espace utilisateur, parmi la pluralité de modèles de prédiction de données par l'attribution de données IoT publiées ayant une corrélation la plus élevée avec des données d'échantillon des données IoT utilisateur parmi les éléments de données IoT publiées ; et
un dispositif en périphérie (200) configuré pour extraire les données d'échantillon depuis les données IoT utilisateur collectées depuis le dispositif IoT utilisateur, transmettre les données d'échantillon au dispositif en nuage (100), recevoir le modèle de prédiction de données optimisées sélectionné depuis le dispositif en nuage (100), prédire une variation des données IoT utilisateur par l'utilisation du modèle de prédiction de données optimisé, et prédire le changement d'environnement intérieur de l'espace utilisateur (S4), d'après un résultat de prédiction obtenu par la prédiction de la variation des données IoT utilisateur.

8. Système de collaboration périphérie-nuage selon la revendication 7, dans lequel le dispositif en nuage (100) comprend :
un module de communication en nuage (110, 120) configuré pour communiquer avec la pluralité de dispositifs IoT (300) et le dispositif en périphérie (200) par fil ou sans fil pour recevoir les données d'échantillon depuis le dispositif en périphérie (200) ;
un module de gestion de données en nuage (130) configuré pour collecter les éléments de données IoT publiées reçues par le biais du module de communication en nuage (110, 120) ; et
un module de gestion de modèle en nuage (140) configuré pour apprendre les éléments de données IoT publiées fournies en entrée depuis le module de gestion de données en nuage (130) pour générer la pluralité de modèles de prédiction de données, et comparer les éléments de données IoT publiées avec les données d'échantillon reçues par le biais du module de communication en nuage (110, 120) pour sélectionner le modèle de prédiction de données optimisé.

9. Système de collaboration périphérie-nuage selon la revendication 7, dans lequel le dispositif en périphérie (200) comprend :
un module de communication en périphérie (210, 220) configuré pour communiquer avec chacun du dispositif IoT utilisateur (300) et du dispositif en nuage (100) ;
un module de gestion de données en périphérie (230) configuré pour collecter les données IoT utilisateur reçues depuis le dispositif IoT utilisateur (300) par le biais du module de communication en périphérie (210, 220) et transmettre les données d'échantillon, générées par la diminution d'une dimension des données IoT utilisateur collectées, au dispositif en nuage (100) par le biais du module de communication en périphérie (210, 220) ;
un module de gestion de modèle en périphérie (240) configuré pour demander le modèle de prédiction de données optimisé depuis le dispositif en nuage (100) par le biais du module de communication en périphérie (210, 220) et recevoir le modèle de prédiction de données optimisé depuis le dispositif en nuage (100) par le biais du module de communication en périphérie (210, 220) pour stocker le modèle de prédiction de données optimisé ; et
un modèle d'inférence (250) configuré pour prédire la variation des données IoT utilisateur par l'utilisation du modèle de prédiction de données optimisé stocké dans le module de gestion de modèle en périphérie (240).

10. Système de collaboration périphérie-nuage permettant d'analyser des données de l'Internet des objets (IoT) pour prédire une variation de données IoT utilisateur mesurées par un dispositif IoT utilisateur (300) fourni dans un espace utilisateur (S4), le système de collaboration périphérie-nuage comprenant :
un dispositif en nuage (100) configuré pour générer une pluralité de modèles de prédiction de données permettant de prédire un changement d'environnement intérieur de chacun d'une pluralité d'espaces externes ayant des environnements intérieurs différents d'un environnement intérieur de l'espace utilisateur, d'après des éléments de données IoT publiées distribués par une pluralité de dispositifs IoT (300) respectivement fournis dans la pluralité d'espaces externes (S1, S2, S3) et générer des éléments de données d'échantillon générés par la diminution de dimensions des éléments de données IoT publiées ; et
un dispositif en périphérie (200) configuré pour recevoir les éléments de données d'échantillon depuis le dispositif en nuage (100), sélectionner un modèle de prédiction de données, optimisé pour prédire un changement d'environnement intérieur de l'espace utilisateur (S4), parmi la pluralité de modèles de prédiction de données par l'utilisation de données d'échantillon ayant une corrélation la plus élevée avec des données d'échantillon reçues des données IoT utilisateur collectées depuis le dispositif IoT utilisateur (300) parmi les éléments de données d'échantillon, transmettre un message de demande demandant le modèle de prédiction de données optimisé sélectionné au dispositif en nuage (100), recevoir le modèle de prédiction de données optimisé depuis le dispositif en nuage (100) recevant le message de demande, prédire la variation des données IoT utilisateur par l'utilisation du modèle de prédiction de données optimisé reçu, et prédire le changement d'environnement intérieur de l'espace utilisateur, d'après un résultat de prédiction obtenu par la prédiction de la variation des données IoT utilisateur.

11. Système de collaboration périphérie-nuage selon la revendication 10, dans lequel le dispositif en nuage (100) comprend :
un module de communication en nuage (110, 120) configuré pour communiquer avec la pluralité de dispositifs IoT (300) et le dispositif en périphérie (200) par fil ou sans fil pour recevoir le message de demande depuis le dispositif en périphérie (200) ;
un module de gestion de données en nuage (130) configuré pour collecter les éléments de données IoT publiées reçues par le biais du module de communication en nuage (110, 120) ; et
un module de gestion de modèle en nuage (140) configuré pour apprendre les éléments de données IoT publiées fournies en entrée depuis le module de gestion de données en nuage (130) pour générer la pluralité de modèles de prédiction de données, et transmettre un modèle de prédiction de données optimal, sélectionné d'après le message de demande parmi la pluralité de modèles de prédiction de données, au dispositif en périphérie (200) par le biais du module de communication en nuage (110, 120).

12. Système de collaboration périphérie-nuage selon la revendication 10, dans lequel le dispositif en périphérie (200) comprend :
un module de communication en périphérie (210, 220) configuré pour communiquer avec chacun du dispositif IoT utilisateur (300) et du dispositif en nuage (100) ;
un module de gestion de données en périphérie (230) configuré pour collecter les données IoT utilisateur depuis le dispositif IoT utilisateur (300) par le biais du module de communication en périphérie (210, 220) ;
un module de gestion de modèle en périphérie (240) configuré pour recevoir les éléments de données d'échantillon depuis le dispositif en nuage (100) par le biais du module de communication en périphérie (210, 220), attribuer des données d'échantillon ayant une corrélation la plus élevée avec les données IoT utilisateur fournies en entrée depuis le module de gestion de données en périphérie (230) parmi les éléments de données d'échantillon, sélectionner un modèle de prédiction de données, appris d'après des données IoT publiées incluant les données d'échantillon attribuées, en tant que modèle de prédiction de données optimisé parmi la pluralité de modèles de prédiction de données, et transmettre le message de demande demandant le modèle de prédiction de données optimisé sélectionné au dispositif en nuage (100) ; et
un modèle d'inférence (250) configuré pour recevoir le modèle de prédiction de données optimisé depuis le dispositif en nuage (100) recevant le message de demande et prédire la variation des données IoT utilisateur par l'utilisation du modèle de prédiction de données optimisé reçu.
